# EUROPÄISCHE PATENTSCHRIFT

(11) **EP 0 641 536 B1**
(45) Veröffentlichungstag und Bekanntmachung des Hinweises auf die Patenterteilung: **10.07.1996**
(21) Anmeldenummer: 94113253.2
(22) Anmeldetag: 25.08.1994
(51) Int. Cl.: A47J 31/40

(54) **Kaffeemaschinenautomat**
Automated coffee machine
Machine à café automatique

(30) Priorität: 02.09.1993 DE 4329597
(43) Veröffentlichungstag der Anmeldung: 08.03.1995
(73) Patentinhaber: HGZ Maschinenbau AG, CH-8108 Dällikon - ZH (CH)
(72) Erfinder: Sager, Peter, CH-8113 Boppelsen (CH)
(74) Vertreter: Rehberg, Elmar, Dipl.-Ing.

(56) Entgegenhaltungen:
- EP-A- 0 192 797
- EP-A- 0 514 313
- EP-A- 0 521 561
- CH-A- 635 740
- DE-A- 4 133 697
- FR-A- 1 373 832

## Beschreibung

Die Erfindung bezieht sich auf einen Kaffeemaschinenautomaten, insbesondere für Einzeltassen- und Kännchenfertigung, mit einem ein Gehäuse aufweisenden Durchlauferhitzer für die Bereitstellung von Heißwasser, mit mindestens einer Einrichtung zur Zufuhr von Kaffeepulver, mit einer Brühvorrichtung, die einen aus einem stationär mit vertikaler Achse angeordneten Rohrabschnitt sowie zwei Verschlußstücken gebildeten Brühraum aufweist, der vorzugsweise in dem Durchlauferhitzer angeordnet ist, mit einem Axialantrieb für die Bewegung des oberen Verschlußstücks an einem Dreharm in eine Brühstellung in den Rohrabschnitt hinein und aus diesem heraus, einem Schwenkantrieb für die Bewegung des oberen Verschlußstücks in eine Parkstellung außerhalb der Achse des Rohrabschnitts und in eine Bereitschaftsstellung in der Achse des Rohrabschnitts sowie einem Vertikalantrieb für das untere Verschlußstück, und mit einem angetriebenen Schwenkabstreifer für die Abfuhr der Tablette aus Kaffeepulver.

Unter einem Kaffeemaschinenautomaten wird eine Maschine verstanden, bei der die Vorgänge des Mahlens des Kaffeepulvers, des Einbringens des Kaffeepulvers in den Brühraum, der Brühvorgang selbst und der Ausstoß des ausgelaugten Kaffeepulvers in Form des Ausschiebens der ausgelaugten und ausgepreßten Tablette von Kaffeepulver automatisch erfolgen, ohne daß einer dieser oder weiterer Verfahrensschritte manuell ausgelöst oder unterstützt werden müßten. Es versteht sich aber, daß der Kaffeemaschinenautomat zur Durchführung eines Zyklusses durch Drücken eines Schalters o. ä. in Gang gesetzt werden muß. Die Erfindung ist auch auf einen Mengenfrischbrühautomaten anwendbar.

Ein Kaffeemaschinenautomat der eingangs beschriebenen Art ist aus der DE-A-41 33 697 bekannt. Das obere Verschlußstück der Brühvorrichtung ist an einem Dreharm angeordnet, der um ein ortsfestes Lager schwenkbar ist. Das obere Verschlußstück ist mit dem Dreharm aus einer Bereitschaftsstellung in der Achse des Rohrabschnittes oberhalb des Brühraums in eine Parkstellung außerhalb der Achse des Rohrabschnittes verschwenkbar, wobei für diese Verschwenkung ein Schwenkantrieb in Form eines Elektromotors mit nachgeschaltetem Schneckengetriebe vorgesehen ist. Auf dem Dreharm ist darüberhinaus ein Axialantrieb angeordnet, mit dessen Hilfe das obere Verschlußstück zum Erreichen der Brühstellung aus der Bereitschaftsstellung heraus in den Rohrabschnitt dichtend einfahrbar ist. Außerdem weist der bekannte Kaffeemaschinenautomat einen Vertikalantrieb für das untere Verschlußstück auf. Somit sind bei diesem bekannten Kaffeemaschinenautomaten drei Antriebe für die Bewegung der beiden Verschlußstücke vorgesehen. Durch die Lagerung des Dreharms um ein ortsfestes Lager ist es möglich, das obere Verschlußstück des Brühraums ausgehend von der Parkstellung in die Bereitschaftsstellung und die anschließende Brühstellung mit der erforderlichen Genauigkeit zu positionieren und zu führen, ohne daß das obere Verschlußstück zweiteilig ausgebildet werden müßte. Weiterhin weist der bekannte Kaffeemaschinenautomat einen Schwenkabstreifer für die Abfuhr der Tablette aus Kaffeepulver auf. Dieser Schwenkabstreifer ist an dem Dreharm befestigt. Die Abfuhr der ausgelaugten Tablette aus Kaffeepulver erfolgt durch einen Schwenkvorgang des Dreharms um sein festes Lager, deren Schwenkrichtung mit dem Anfahren der Bereitsschaftsstellung aus der Parkstellung heraus übereinstimmt. Demzufolge ist es erforderlich, innerhalb eines Brühzyklusses den Dreharm zweimal hin- und herzuschwenken. Der eine Hin- und Herschwenkvorgang dient der Durchführung des Brühvorganges. Der anderen Hin- und Herschwenkvorgang dient der Abfuhr der ausgelaugten Tablette. In der Parkstellung muß die Tablette abgeführt sein, und das obere Verschlußstück darf sich nicht oberhalb des Brühraums befinden. Die zu dem Kaffeemaschinenautomaten gehörende Steuereinrichtung muß dies entsprechend berücksichtigen.

Aus der EP-A-0 192 797 ist eine Kaffeemaschine bekannt, die nur einen einzigen Motor für die Bewegung des oberen und des unteren Verschlußstückes aufweist. Das obere Verschlußstück ist fest an einem Joch angeordnet, welches unverdrehbar, jedoch axial verschiebbar an einer Antriebsstange sitzt, die von dem Motor angehoben bzw. abgesenkt wird. Das obere Verschlußstück ist damit nur in axialer Richtung oberhalb des Brühraums verfahrbar. Damit wird in der Parkstellung des oberen Verschlußstückes der Raum zum Einbringen von Kaffeepulver teilweise versperrt, so daß die Anordnung eines schwenkbaren Kaffeezubringers erforderlich wird. Die Kaffeebohnen werden somit nicht unmittelbar in den Brühraum hineingemahlen, sondern zunächst in den Kaffeezubringer. Durch einen Verschwenkvorgang des Kaffeezubringers um die Achse der Antriebsstange wird der Kaffeezubringer in den Zwischenraum zwischen Brühraum und oberem Verschlußstück eingeschwenkt, und das Kaffeepulver fällt in den Brühraum. Zum Ableiten des Verschwenkvorganges des Kaffeezubringers ist das Joch an der Antriebsstange auch nach der dem oberen Verschlußstück abgekehrten Seite verlängert. Es besitzt einen Gleitstein, der in eine Nut einer Drehwelle eingreift, so daß von der axialen Bewegung der Antriebsstange eine Drehbewegung abgegriffen wird, die über ein Zahnrad und ein Zahnsegment auf den Kaffeezubringer übertragen wird. Das untere Verschlußstück ist in der Brühstellung am Boden des Brühraums abgestützt. Es besitzt eine Kolbenstange, die sich nach unten erstreckt und mit einem Tragarm an der Antriebsstange zusammenarbeitet. Auf diese Weise wird von dem einen Motor her auch das untere Verschlußstück mit der darauf liegenden Tablette angehoben, um sie in eine Stellung oberhalb des Brühraums zu überführen. Der bauliche Aufwand dieser Kaffeemaschine ist durch die Verwendung nur eines Motors vorteilhaft gering. Es wird jedoch ein gesonderter Kaffeezubringer erforderlich. Das obere Verschlußstück und das untere Verschlußstück können nur abhängig voneinander bewegt werden. Es besteht keine Möglichkeit, direkt in den Brühraum zu mahlen. Durch die Betätigung des Kaffeezubringers vergrößert sich in nachteiliger Weise die Bauhöhe der Antriebsstange und des Jochs. Die Einzelteile der Kaffeemaschine müssen relativ genau bearbeitet sein, weil es erforderlich ist, den Kaffeezubringer fluchtend zur Achse des Brühraums zu positionieren. Die Kaffeemaschine weist drei Achsen und eine große Anzahl von einzelnen Elementen auf. Für diese großen und langen Teile sind aufwendige Führungen erforderlich. In der Brühstellung wird die Antriebsstange auf Biegung beansprucht. Eine Säuberung des oberen Kolbens, beispielsweise durch einen Duschvorgang zwischen zwei Zyklen, ist nicht möglich, da dieses Duschwasser in den Brühraum gelangen würde. Nachteilig ist weiterhin, daß ein gezieltes Pressen und Entlasten einer vorverdichteten Tablette aus frischem Kaffeepulver vor dem Brühvorgang nicht möglich ist.

Aus der DE-A-29 12 841 ist eine Vorrichtung zum Herstellen von Espresso-Kaffee bekannt, die eine Brühvorrichtung aufweist, die einen aus einem stationär mit vertikaler Achse angeordneten Rohrabschnitt sowie zwei Verschlußstücken gebildeten Brühraum aufweist. Die Verschlußstücke werden rein translatorisch bewegt, wobei die Bewegungen beider Verschlußstücke von einem einzigen Motor abgeleitet werden und eine Vielzahl kompliziert und aufwendig ausgebildeter mechanischer Steuerelemente zum Einsatz gelangen. Hierzu gehört eine Schubkurbelanordnung, verschiedene Nockenplatten, Profilplatten, Stifte, Steuerstangen, Schwenkarme usw.. Die Vorrichtung weist keinen Dreharm auf, weil nur translatorische Bewegungen abgeleitet werden. Dies hat den Nachteil, daß die Zuverlässigkeit der Steuerung nicht so hoch ist, wie bei dem gattungsgemäßen Kaffeemaschinenautomaten, der einen Dreharm aufweist und damit eine rotatorische Bewegung des oberen Verschlußstückes erbringt.

Der Erfindung liegt die Aufgabe zugrunde, den baulichen Aufwand für einen Kaffeemaschinenautomaten der eingangs beschriebenen Art zu reduzieren und gleichzeitig den Brühzyklus zu vereinfachen, ohne auf die Vorteile des Vorverdichtens, Entlastens und Ausschiebens sowie der Abfuhr der Tablette aus Kaffeepulver verzichten zu müssen.

Erfindungsgemäß wird dies bei dem Kaffeemaschinenautomaten der eingangs beschriebenen Art dadurch erreicht, daß das obere Verschlußstück fest mit dem Dreharm verbunden ist, daß für den Axialantrieb und für den Schwenkantrieb des Dreharms mit dem oberen Verschlußstück sowie den angetriebenen Schwenkabstreifer ein einziger Motor mit einem nachgeschalteten Verteilergetriebe vorhanden ist und daß das Verteilergetriebe eine hubartig angetriebene Schwenksäule, eine axial gesicherte Führungsbuchse und eine stationäre Nutbuchse aufweist und daß in der Führungsbuchse und in der Nutbuchse je eine Gleitbahn für einen mit der Schwenksäule verbundenen Gleitstein vorgesehen ist.

Die Erfindung sieht also einen Antrieb für das obere Verschlußstück und einen davon getrennten zweiten Antrieb für das untere Verschlußstück vor, damit zwar die beiden Verschlußstücke relativ zum Rohrabschnitt des Brühraums unabhängig voneinander bewegt werden können, um das Vorpressen, Entlasten und Anheben der Tablette aus Kaffeepulver durchführen zu können. Für das obere Verschlußstück wird jedoch die Anzahl der Antriebe verringert, wobei aber trotzdem kein Nachteil in den einzelnen Phasen des Brühzyklusses entsteht. Sämtliche Hub- und Schwenkbewegungen des oberen Verschlußstückes werden von diesem einen Antrieb mit Hilfe eines einfach ausgebildeten Verteilergetriebes abgeleitet. Das Verteilergetriebe weist eine hubartig angetriebene Schwenksäule, eine axial gesicherte Führungsbuchse und eine stationäre Nutbuchse auf. In der Führungsbuchse und in der Nutbuchse ist je eine Gleitbahn für einen mit der Schwenksäule verbundenen Gleitstein vorgesehen. Die Schwenksäule selbst wird nur hubartig betätigt, d. h. in axialer Richtung angehoben bzw. gesenkt. Dieser Hubbewegung wird eine Schwenkbewegung überlagert, die die Schwenksäule mit Hilfe des an ihr vorgesehenen Gleitsteins von der stationären Nutbuchse abnimmt.

Die Nutbuchse kann als gesonderter Teil oder aber auch als Bestandteil des Gehäuses vorgesehen sein. Die beiden Gleitbahnen in der Nutbuchse einerseits und in der Führungsbuchse andererseits sind aufeinander abgestimmt. Der Gleitstein durchsetzt beide Gleitbahnen. Damit wird eine robuste, beanspruchungsgerechte Ausbildung des Verteilergetriebes möglich. Die einzelnen Bewegungen können sehr genau und reproduzierbar festgelegt werden. Damit wird die Steuereinheit entlastet. Einige Bewegungen werden über das Verteilergetriebe mechanisch zwangsweise gekoppelt, wodurch nicht nur die Steuereinheit vereinfacht wird, sondern darüberhinaus vorteilhaft die Betriebssicherheit erhöht wird. Der bei dem eingangs beschriebenen Stand der Technik erforderliche gesonderte vertikale Antrieb des oberen Verschlußstückes kommt in Fortfall. Mit dem Verteilergetriebe lassen sich die einzelnen Bewegungen des oberen Verschlußstückes und des Schwenkabstreifers von einem Antrieb ableiten und aufeinander abstimmen. Es sind weniger Sensoren erforderlich, und die mechanische Zwangskupplung der Bewegungen erweist sich als vorteilhaft. Die Abstreiferwirkung ist mit der Öffnungsbewegung gekoppelt, also dem Verschwenken von der Bereitschaftsstellung in die Parkstellung. Die Anzahl der mechanischen Teile ist verringert, und die Betriebssicherheit wird erhöht. Es ist nicht erforderlich, einen Kaffeezubringer zu realisieren und anzutreiben. Dadurch, daß die Parkstellung außerhalb der Achse des Brühraums erreicht wird, ist der Brühraum von oben frei zugänglich. Damit ist es möglich, mindestens eine Einrichtung zur Zufuhr von Kaffeepulver ortsfest so vorzusehen, daß direkt in den Brühraum hinein gemahlen werden kann. Durch die Aufteilung der Bewegung des oberen Verschlußstückes in eine axiale Strecke zwischen Brühstellung und Bereitschaftsstellung und eine gewindeartig steigende Strecke zwischen Bereitschaftsstellung und Parkstellung ist es möglich, bis zu drei Einrichtungen zur Zufuhr von Kaffeepulver oder sogar noch mehr stationär anzuordnen, so daß wahlweise unterschiedliche Kaffeesorten oder Kaffeebohnenzubereitungen gemahlen werden können, wie dies für Normalkaffee, Cappuccino, Mokka u. dgl. erforderlich ist.

Besonders vorteilhaft ist es, wenn der Motor unterhalb des Durchlauferhitzers angeordnet ist und das Verteilergetriebe das Gehäuse des Durchlauferhitzers durchsetzt. Damit sind beide Motoren unterhalb des Durchlauferhitzers angeordnet, also an einer Stelle, die thermisch nicht so hoch beansprucht ist. Das Gehäuse des Durchlauferhitzers bildet zugleich auch das Gehäuse des Verteilergetriebes, so daß die gesonderte Anordnung eines Gehäuses entfällt. Außerdem nimmt dieses gemeinsame Gehäuse den Rohrabschnitt des Brühraumes auf. Es gibt damit nur ein großes aus einem zusammenhängenden Stück gebildetes Gehäuse, dessen relativ genaue Bearbeitung keine Probleme mit sich bringt. Andererseits wird damit gleichsam automatisch auch die Genauigkeit erreicht, die für das Positionieren der Teile zueinander erforderlich ist. Insbesondere liegt der Abstand der Achse des Brühraums zu der Achse des Verteilergetriebes fest.

Das Verteilergetriebe kann so ausgebildet sein, daß während des Bewegens des oberen Verschlußstückes aus der Bereitschaftsstellung in die Parkstellung auch der Schwenkabstreifer die Tablette aus Kaffeepulver abführt. Dabei ist der Schwenkabstreifer nicht mit dem Dreharm verbunden, sondern separat gelagert , so daß seine Bewegung gesondert abgenommen werden kann. Freilich ist die Bewegung des oberen Verschlußstückes einerseits und des Schwenkabstreifers andererseits aufeinander abgestimmt und über das Verteilergetriebe gekoppelt. Diese Kopplung ist so durchgeführt, daß die Richtung der Abstreifbewegung mit der Richtung des Verschwenkens des oberen Verschlußstückes aus der Bereitschaftsstellung in die Parkstellung übereinstimmt. Damit ergibt sich der besondere Vorteil, daß innerhalb eines Brühzyklusses nur ein einziger Hin- und Herschwenkvorgang erforderlich ist. Der Brühzyklus wird damit schneller durchführbar und einfacher beherrschbar.

Die Gleitbahn in der Nutbuchse weist einen achsparallelen Anfangsbereich für das Überführen des oberen Verschlußstückes aus der Brühstellung in die Bereitschaftsstellung und umgekehrt auf. Innerhalb dieses achsparallelen Anfangsbereiches wird eine Drehbewegung der Schwenksäule verhindert und eine achsparallele Hubbewegung sichergestellt. Dies muß zumindest in dem Bereich geschehen, in dem sich das obere Verschlußstück in dem Rohrabschnitt des Brühraumes befindet. Ein sanfter Übergang zwischen diesem Bereich und dem gewindeartig steigenden Bereich ist sinnvoll.

Der gewindeartig steigende Bereich versetzt den Dreharm mit dem fest daran angeordneten oberen Verschlußstück in eine Schwenkbewegung aus der Bereitschaftsstellung in die Parkstellung und umgekehrt. Dabei entfernt sich einerseits das obere Verschlußstück von der Achse des Rohrabschnittes, so daß der Raum oberhalb des Rohrabschnittes frei wird. Andererseits ist die Bereitschaftsstellung auf vergleichsweise niedrigerer Höhenlage angeordnet als die Parkstellung, so daß Auslaufschurren von Kaffeemühlen oberhalb des Rohrabschnittes in der Bereitschaftsstellung ohne weiteres unterfahren werden können.

Gleichzeitig ist das relative Anheben des oberen Verschlußstückes in die Parkstellung hinein insofern vorteilhaft, als damit eine Duschposition zur Säuberung des oberen Verschlußstückes durch das Ausspritzen einer entsprechenden Menge Wassers möglich wird. Dieses Duschwasser kann über einen Ablauf abgeführt werden und gelangt damit nicht in den Brühraum.

Der Schwenkabstreifer ist hinter dem oberen Verschlußstück angeordnet, d. h. er folgt bei dem Verschwenken des oberen Verschlußstückes aus der Bereitschaftsstellung in die Parkstellung diesem nach. Dies erbringt den Vorteil, daß der Raum, in den die ausgelaugte Tablette angehoben wird, frei von dem oberen Verschlußstück ist und der Schwenkabstreifer seine Wirkung erbringen kann. Der Schwenkabstreifer ist zweckmäßig etwa halbkreisförmig gekrümmt ausgebildet, wobei die konkave Seite dem oberen Verschlußstück zugeordnet ist. Damit ist es möglich, beim Überführen des oberen Verschlußstückes von der Bereitschaftsstellung in die Parkstellung zugleich auch den Schwenkabstreifer zum Abführen der Tablette zu nutzen, ohne daß dies den Brühzyklus komplizierter macht.

Die Gleitbahn in der Führungsbuchse kann zweckmäßig achsparallel angeordnet sein. Die Gleitbahn verläuft damit geradlinig und ist einfach herstellbar. Die Drehbewegung wird von dem gewindeartig steigenden Bereich der Gleitbahn der Nutbuchse abgenommen. Es ist natürlich andererseits auch möglich, die Gleitbahn in der Führungsbuchse ebenfalls gewindeartig steigend oder fallend auszubilden, je nach der speziellen gewünschten Bewegung des Schwenkabstreifers.

Der Dreharm ist vorteilhafterweise auf der dem oberen Verschlußstück abgekehrten Seite über die Schwenksäule hinaus verlängert und weist einen Anschlag auf; am Gehäuse des Durchlauferhitzers ist ein dem Anschlag zugeordneter Gegenanschlag vorgesehen, an dem sich der Anschlag des Dreharms in der Brühstellung des oberen Verschlußstücks abstützt. Der Anschlag oder der Gegenanschlag können einstellbar ausgebildet sein, so daß damit die Position des oberen Verschlußstückes in der Brühstellung festgelegt wird. Wenn während des Brühvorganges im Brühraum Druck auf das obere Verschlußstück einwirkt, kann eine entsprechende Gegenkraft zwischen Anschlag und Gegenanschlag aufgenommen werden, so daß letztendlich die Schwenksäule frei von einer Biegebeanspruchung gehalten wird. Dies kommt ihrer Lagerung, Betriebssicherheit und Langlebigkeit zugute. Die Führungsbuchse bildet zugleich das Lager für die Schwenksäule.

Der Schwenkabstreifer ist zweckmäßigerweise mit der Führungsbuchse drehfest verbunden, damit jede Verdrehung der Führungsbuchse auf den Schwenkabstreifer entsprechend übertragen wird. Die Führungsbuchse ist an einer Axialbewegung gehindert und kann sich damit nur an Ort und Stelle verdrehen, und zwar entsprechend dem Zusammenspiel zwischen Gleitstein und den beiden Gleitbahnen.

Der Motor für den Antrieb der Schwenksäule kann ein Elektromotor, insbesondere ein Gleichstrommotor, sein; zwischen Motor und Verteilergetriebe kann ein Schneckengetriebe und eine Mutter/Spindel-Einheit vorgesehen sein, wobei die Spindel mit der Schwenksäule drehfest verbunden ist. Die Mutter ist zwar drehbar gelagert, jedoch an einer Axialbewegung gehindert, so daß bei einem Verdrehen der Mutter an Ort und Stelle vermittels des Schneckengetriebes die Schwenksäule eine hubartige Bewegung ausführt. Andererseits könnte der Motor für den Antrieb auch als Hydromotor ausgebildet sein. Es empfiehlt sich jedoch die Anwendung eines Elektromotors mit der Möglichkeit seiner genauen und reproduzierbaren Steuerung.

Der Motor für die Bewegung des unteren Verschlußstückes kann ein Elektromotor, insbesondere ein Gleichstrommotor sein. Beide Antriebe bzw. Motore können ähnlich ausgebildet sein.

Die Ausbildung und Anordnung der Gleitbahnen in der Nutbuchse und in der Führungsbuchse sind auf die gewünschten Relativbewegungen abgestimmt. Die Gleitbahn in der Nutbuchse kann einen achsparallelen Endabschnitt aufweisen, um in die Parkstellung bzw. aus dieser heraus mit einer axialen Bewegung zu enden bzw. zu beginnen.

Die Erfindung wird anhand eines bevorzugten Ausführungsbeispiels weiter erläutert und beschrieben. Es zeigt:
- Figur 1: einen vertikalen Schnitt durch wesentliche Teile des Kaffeemaschinenautomaten,
- Figur 2: eine Seitenansicht des Kaffeemaschinenautomaten gemäß Figur 1,
- Figur 3: eine Draufsicht auf den Kaffeemaschinenautomaten,
- Figur 4: eine Schnittdarstellung des Verteilergetriebes,
- Figur 5: eine Ansicht von Teilen des Verteilergetriebes und
- Figur 6: einen Schnitt durch das Verteilergetriebe nach der Linie VI-VI in Figur 4.

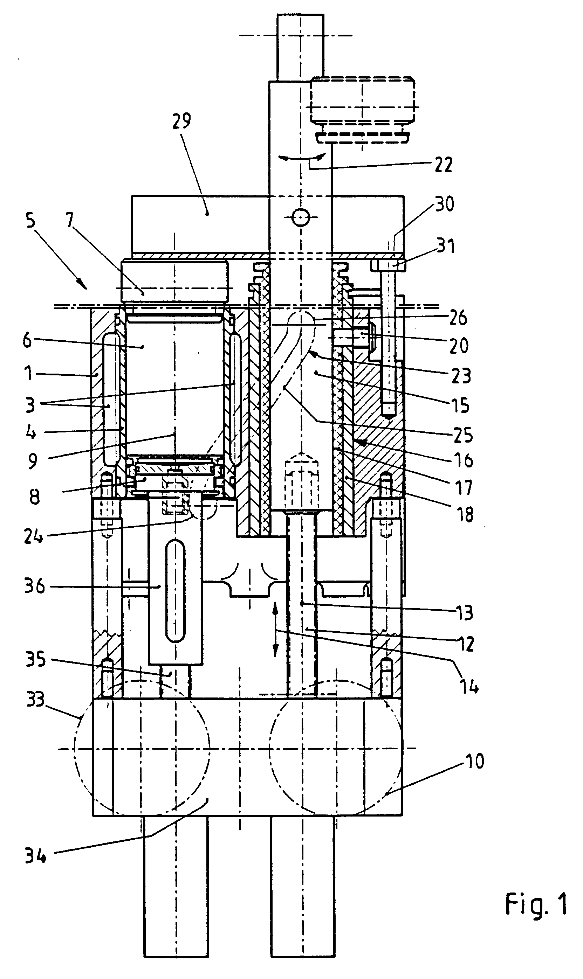

Der Kaffeemaschinenautomat gemäß den Figuren 1 bis 3 weist ein gemeinsames Gehäuse 1 auf, welches in seinem Innern einen nicht näher dargestellten Durchlauferhitzer 2 mit seinem Heißwasserraum 3 enthält. Der Heißwasserraum 3 umspült einen in das Gehäuse 1 dichtend eingesetzten Rohrabschnitt 4, der ein wesentliches Element einer Brühvorrichtung 5 bildet. Der Brühraum 6 der Brühvorrichtung 5 wird ansonsten noch von einem oberen Verschlußstück 7 und einem unteren Verschlußstück 8 begrenzt. Das obere Verschlußstück 7 ist als Wasserkolben ausgebildet, d. h. von hier wird das Wasser während des Brühvorganges in den Brühraum 6 eingeleitet und durch das Kaffeepulver geschickt. Das untere Verschlußstück 8 ist als Kaffeekolben ausgebildet, d. h. er dient als Träger für die Tablette aus Kaffeepulver. Grundsätzlich können die Verschlußstücke 7 und 8 aber auch in umgekehrter Weise genutzt bzw. betrieben werden. Das untere Verschlußstück 8 verbleibt immer im Rohrabschnitt 4 und wird nur axial hubartig entsprechend der vertikalen Achse 9 bewegt. Das obere Verschlußstück 7 hingegen wird aus dem Rohrabschnitt 4 in Richtung der Achse 9 ausgefahren und dann seitlich weggeschwenkt, damit die dann freie Öffnung des Rohrabschnittes 4 bzw. des Brühraums 6 ungehindert mit Kaffeepulver beschickt werden kann. Die beiden Verschlußstücke 7 und 8 sind kolbenartig ausgebildet und mit Dichtungen versehen, die der Übersichtlichkeit halber nicht dargestellt sind. Das untere Verschlußstück 8 ist mit einem Sieb für den Durchtritt des Kaffeegetränks versehen und mit dem Auslauf für das abzugebende Kaffeegetränk versehen.

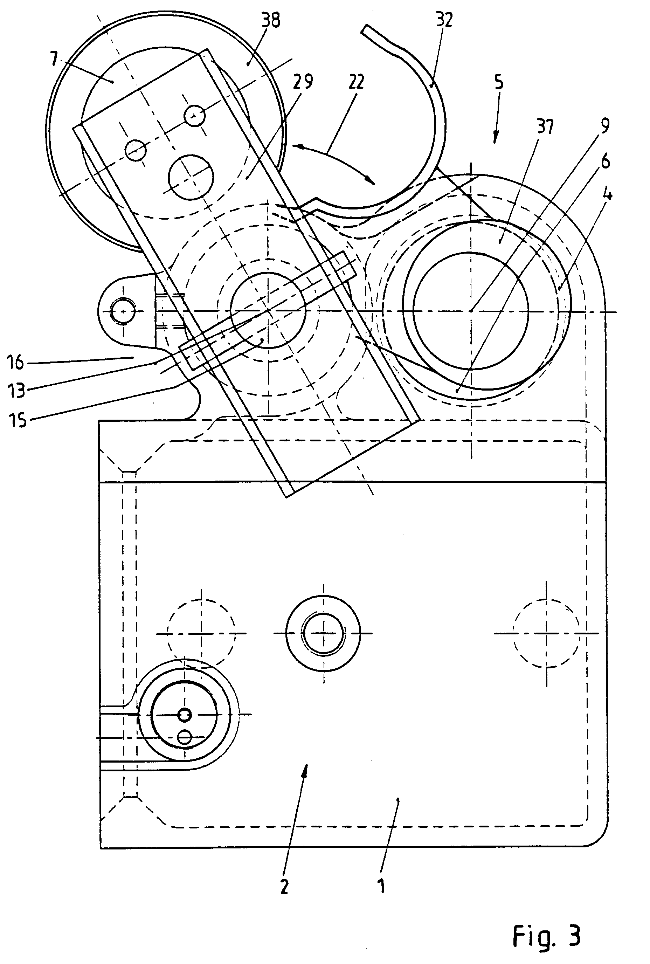

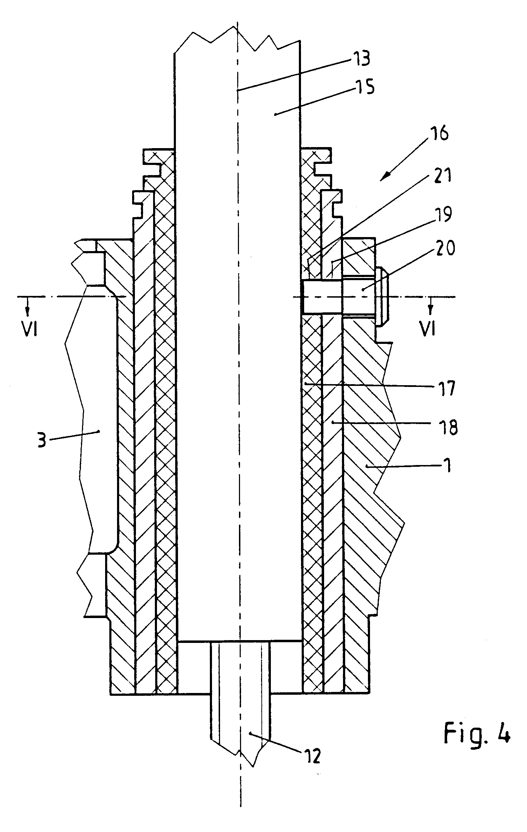

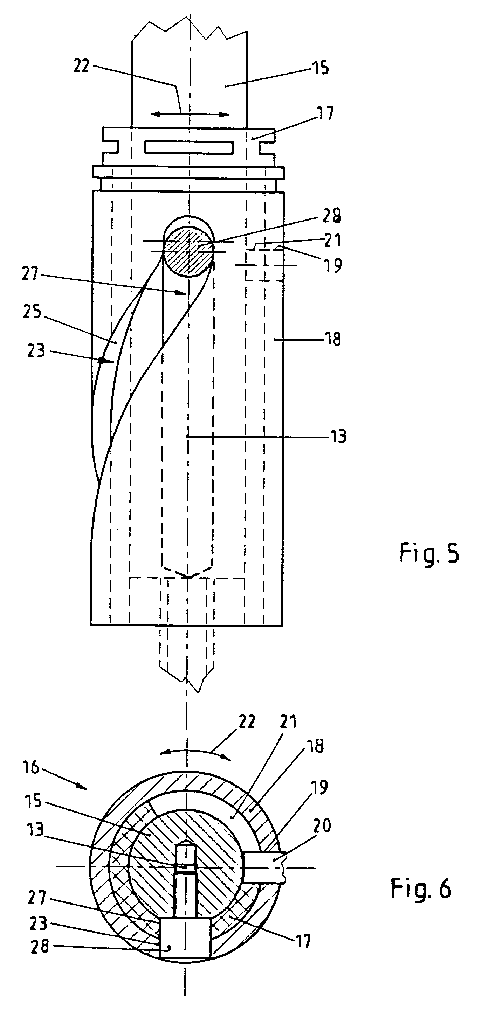

Für die Bewegungen des oberen Verschlußstücks 7 ist ein einziger Motor 10 vorgesehen, der unterhalb des Gehäuses 1 angeordnet ist. Dem Motor 10 ist ein Schneckengetriebe 11 nachgeschaltet. Es folgt sodann eine Mutter/Spindel-Einheit, deren Spindel 12 mit vertikaler Achse 13 vorgesehen ist. Die Achse 13 erstreckt sich mit Abstand parallel zur Achse 9. Die nicht näher dargestellte und zu der Spindel 12 gehörige Mutter ist drehbar, aber axial unverschieblich gelagert, so daß bei einer Drehung der Mutter die Spindel 12 eine reine Hubbewegung in Richtung der Achse 13 gemäß Doppelpfeil 14 ausführt. Die Spindel 12 ist mit einer Schwenksäule 15 eines Verteilergetriebes 16 drehfest verbunden. Das Verteilergetriebe 16 durchsetzt ebenfalls das Gehäuse 1 des Durchlauferhitzers 2. Figur 3 läßt erkennen, wie das Gehäuse 1 des Durchlauferhitzers 2 sich seitlich so erstreckt, daß einerseits die Brühvorrichtung 5 und andererseits das Verteilergetriebe 16 aufgenommen wird. Das Verteilergetriebe 16 weist von innen nach außen die Schwenksäule 15, eine Führungsbuchse 17 und eine Nutbuchse 18 auf. Das Verteilergetriebe 16 ist im Einzelnen anhand der Figuren 4 bis 6 noch übersichtlicher erkennbar. Die Nutbuchse 18 ist ortsfest im Gehäuse 1 gelagert. Zu diesem Zweck besitzt sie eine Bohrung 19, in die ein Bolzen 20 eingreift, der radial von außen nach innen in das Gehäuse 1 eingeschraubt ist und so die Nutbuchse 18 an einer Drehung und einer Axialverschiebung hindert. Der Bolzen 20 durchsetzt jedoch nicht nur die Nutbuchse 18, sondern auch die Führungsbuchse 17. Die Führungsbuchse 17 weist an dieser Stelle einen Schlitz 21 auf, der sich radial über dem Umfang der Führungsbuchse 17 etwa in einem Winkel von 120° erstreckt, wie dies aus Figur 6 ersichtlich ist. Der Bolzen 20 hindert somit die Führungsbuchse 17 an einer Axialbewegung gemäß Doppelpfeil 14, gestattet jedoch andererseits eine Relativverschwenkung gemäß Doppelpfeil 22 um die Achse 13.

In der ortsfesten Nutbuchse 18 ist eine Gleitbahn 23 vorgesehen, die in Figur 1 in strichpunktierter Linienführung in die Ebene abgewickelt dargestellt ist. Die Gleitbahn 23 weist einen achsparalleln Anfangsbereich 24 an ihrem unteren Ende auf, an den sich mit entsprechendem Übergang ein gewindeartig steigender Bereich 25 anschließt. Am oberen Ende kann die Gleitbahn 23 wiederum einen achsparallelen Endabschnitt 26 aufweisen. Die Führungsbuchse 17 weist ebenfalls eine Gleitbahn 27 auf, die achsparallel verläuft (Figur 5). Die Gleitbahn 27 könnte aber auch gewindeartig steigend oder fallend ausgebildet sein. Mit den beiden Gleitbahnen 23 und 27 arbeitet ein Gleitstein 28 zusammen (Figuren 5 und 6), der fest an der Schwenksäule 15 angeordnet ist und sich radial nach außen durch die Durchbrechungen der Gleitbahnen 27 und 23 erstreckt. Die Nutbuchse 18 ist zweckmäßig aus Metall ausgebildet, während die Führungsbuchse 17 vorzugsweise als Kunststofformteil ausgebildet ist. Die Führungsbuchse 17 bildet zugleich die Lagerung für die Schwenksäule 15 des Verteilergetriebes 16. Die Schwenksäule 15 durchsetzt so nicht nur das Gehäuse 1 in vertikaler Richtung, sondern erstreckt sich nach oben über dieses hinaus. Mit der Schwenksäule 15 ist ein Dreharm 29 (Figur 1) drehfest verbunden, an dessen einem freien Ende das obere Verschlußstück 7 der Brühvorrichtung 5 fest gelagert ist. Der Dreharm 29 besitzt auf seiner dem oberen Verschlußstück 7 abgekehrten Seite einen Anschlag 30, der mit einem Gegenanschlag 31 am Gehäuse 1 zusammenarbeitet. Der Gegenanschlag 31 kann in Form einer einstellbaren Schraube gebildet sein, um die Brühstellung des oberen Verschlußstückes 7 festzulegen und eine Abstützung für das obere Verschlußstück 7 in der Brühstellung zu bilden.

Mit dem oberen Ende der Führungsbuchse 17 ist ein Schwenkabstreifer 32 (Fig. 3) sowie ein Trichter 37 drehfest verbunden, die somit ebenso wie die Führungsbuchse 17 eine reine Dreh- oder Schwenkbewegung um die Achse 13 gemäß Doppelpfeil 22 ausführen. In der Parkstellung erreicht der Trichter 37 eine Stellung über dem Brühraum 6 bzw. der Achse 9, sodaß bei einem weiteren Brühzyklus Kaffeepulver von einer Mühle über eine Schurre und den Trichter 37 in den Brühraum 6 gelangen kann. In der Parkstellung steht das obere Verschlußstück 7 oberhalb eines ortsfest angeordneten Ablauftrichters 38, so daß durch einen Duschvorgang mit Heißwasser das obere Verschlußstück gereinigt werden kann.

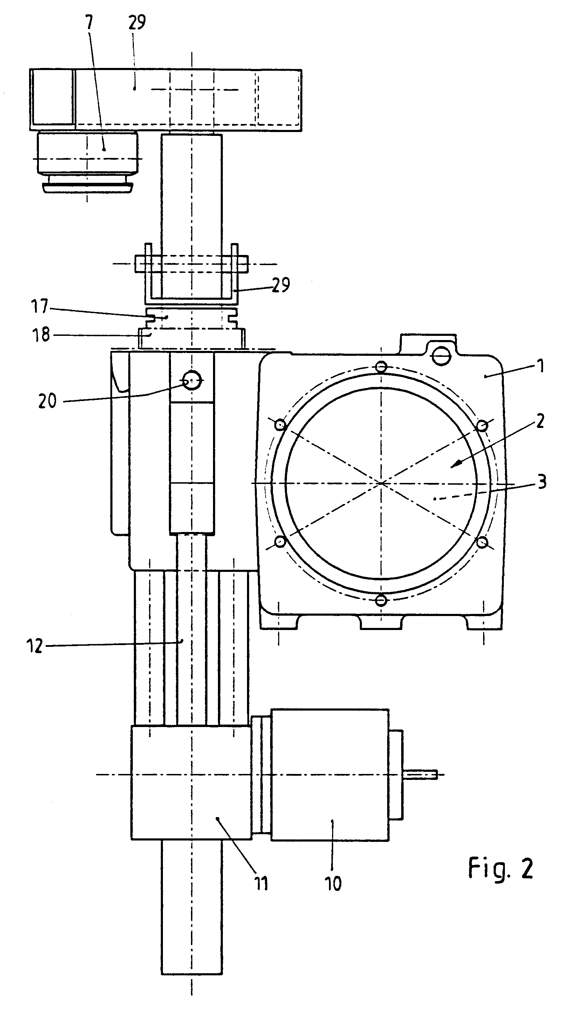

Hinsichtlich der Bewegung des oberen Verschlußstückes 7 werden drei Stellungen unterschieden, nämlich einmal die Brühstellung, bei der sich das obere Verschlußstück 7 eingefahren in den Rohrabschnitt 4 des Brühraums 6 befindet, wie dies in Figur 1 in durchgezogener Linienführung dargestellt ist. In dieser Stellung läuft auch der Brühvorgang ab. Eine Bereitschaftsstellung ist die Stellung, in der sich das obere Verschlußstück 7 noch in der Achse 9, jedoch außerhalb des Rohrabschnittes 4 und über diesem befindet. Diese Stellung ist in keiner der Zeichnungen dargestellt. Schließlich ist eine Parkstellung des oberen Verschlußstückes 7 vorgesehen, die in Figur 1 für das obere Verschlußstück 7 in gestrichelter Linienführung, in den Figuren 2 und 3 jedoch in durchgezogener Linienführung dargestellt ist. In dieser Parkstellung ist das obere Verschlußstück 7 einerseits aus der Achse 9 des Rohrabschnittes 4 gemäß Doppelpfeil 22 hinweggeschwenkt. Andererseits ist es in axialer Richtung angehoben und befindet sich oberhalb des Ablauftrichters 38 und eine Ablaufleitung für Spülwasser, um in dieser Parkstellung einen Dusch- und Reinigungsvorgang für das obere Verschlußstück 7 durchführen zu können. Die Parkstellung ist zugleich die Stellung, in der sich das obere Verschlußstück 7 zwischen zwei Brühzyklen befindet, d. h. jeder Brühzyklus beginnt und endet in der Parkstellung.

Auch für das untere Verschlußstück 8 ist ein Antrieb vorgesehen, der jedoch als reiner Hubantrieb gemäß Doppelpfeil 14 in der Achse 9 erfolgt. Der Antrieb weist einen Motor 33 auf, der ebenso wie der Motor 10 für das obere Verschlußstück 7 unterhalb des Gehäuses 1, auf einer gemeinsamen Lagerplatte 34 angeordnet ist. Die Motoren 10 und 33 können insbesondere als Elektromotoren, als Hydromotoren o. dgl. ausgebildet sein. Es besteht die Möglichkeit, die Motoren 10 und 33 übereinstimmend auszubilden. Auch dem Motor 33 ist ein nicht näher dargestelltes Schneckengetriebe nachgeschaltet. Über eine axial gesicherte, drehbar gelagerte Mutter wird eine Spindel 35 gemäß Pfeil 14 rein axial in der Achse 9 angetrieben. Die Spindel 35 ist mit einer Kolbenstange 36 verbunden, an deren oberem Ende das untere Verschlußstück 8 angeordnet ist. Das untere Verschlußstück 8 ist in Figur 1 in seiner unteren Endstellung gezeigt. Es wird zum Erreichen der Brühstellung weiter nach oben in den Brühraum 6 eingefahren. Im Verlaufe eines Brühzyklusses kann das untere Verschlußstück 8 schließlich so weit nach oben in dem Rohrabschnitt 4 verfahren werden, daß seine obere Fläche mit der äußeren Abschlußebene des Gehäuses 1 auf der oberen Seite fluchtet.

Ein Brühzyklus läuft wie folgt ab: Das obere Verschlußstück 7 befindet sich in der in Figur 1 gestrichelt dargestellten Parkstellung (siehe auch Fig. 3). Das untere Verschlußstück 8 befindet sich in der in Figur 1 dargestellten niedrigsten Stellung. Der Rohrabschnitt 4 des Brühraums 6 ist damit oben offen. Durch Starten eines Brühzyklusses an einer hier nicht näher dargestellten Steuereinrichtung wird zunächst Kaffeepulver von einer nicht dargestellten Kaffeemühle frisch gemahlen. Es fällt über eine an der Mühle vorgesehene Schurre und den Trichter 37 in den Brühraum 6 und damit auf das untere Verschlußstück 8. Da der Dreharm 29 mit dem oberen Verschlußstück 7 in der Parkstellung über einen vergleichsweise großen Schwenkwinkel (Figur 3) hinweggeschwenkt ist, besteht die Möglichkeit, oberhalb des Brühraums 6 bis zu drei Kaffeemühlen mit ihren Schurren enden zu lassen, um je nach der gewünschten Art des Kaffeegetränks unterschiedliche Kaffeebohnen in den Brühraum 6 hinein zu mahlen. Ist der Mahlvorgang beendet, so wird der Motor 10 in einer solchen Drehrichtung in Gang gesetzt, daß der Dreharm 29 mit dem oberen Verschlußstück 7 aus der Parkstellung in die Bereitschaftsstellung verschwenkt wird. Dies geschieht durch einen kombinierten Schwenk- und Senkvorgang im Uhrzeigersinn um die Achse 13 gemäß Doppelpfeil 22 (Figur 3), wobei auch der Schwenkabstreifer 32 mit dem Trichter 37 hinweggeschwenkt werden. Obwohl die Spindel 12 und damit die Schwenksäule 15 über den Motor 10 nur rein in Richtung der Achse 13 abgesenkt werden, wird durch den gewindeartig fallenden Bereich 25 der Gleitbahn 23 über den Gleitstein 28 der Schwenksäule 15 eine Schwenkbewegung überlagert, die solange andauert, bis das Ende des Bereiches 25 an der Übergangsstelle zu dem achsparallelen Bereich 24 der Gleitbahn 23 erreicht ist. Das obere Verschlußstück 7 befindet sich damit mit seiner Achse fluchtend zur Achse 9, jedoch noch oberhalb und ausgefahren aus dem Rohrabschnitt 4. Mit dieser Bewegung ist auch der Führungsbuchse 17 und dem daran sitzenden Schwenkabstreifer 32 und dem Trichter 37 eine Rückbewegung erteilt worden. Es handelt sich hierbei um eine reine Drehbewegung in Uhrzeigerrichtung gemäß Doppelpfeil 22 (Figur 3). Der Schwenkabstreifer 32 erfüllt dabei keine Funktion. Bei entsprechender Ausbildung kann diese Bewegung jedoch dazu genutzt werden, um versehentlich auf die Oberfläche des Gehäuses 1 im Bereich des Rohrabschnittes 4 aufgefallenes Kaffeepulver zu entfernen.

Der Motor 10 bleibt jedoch auch über die Bereitschaftsstellung hinaus in Tätigkeit, d. h. die Bereitschaftsstellung wird ohne eine Unterbrechung der Bewegung des Motors 10 durchfahren. Der Gleitstein 28 gerät dabei über den Übergangsbereich hinein in den achsparallelen Anfangsbereich 24 der Gleitbahn 23, so daß das obere Verschlußstück 7 aus der Bereitschaftsstellung in die Brühstellung in einer rein axialen Absenkbewegung mit seiner Dichtung in den Rohrabschnitt 4 eingefahren wird. Es wird die Brühstellung für das obere Verschlußstück 7 erreicht, wie dies Figur 1 erkennen läßt. Gleichzeitig legt sich der Anschlag 30 auf dem Gegenanschlag 31 auf. Die Brühstellung ist erreicht. Es wird nun der Motor 33 für das untere Verschlußstück 8 in Tätigkeit gesetzt, und es erfolgt ein Anheben des unteren Verschlußstückes 8, welches so weit nach oben fährt, daß das Kaffeepulver im Brühraum 6 zu einer Tablette verdichtet wird. Dabei preßt das untere Verschlußstück 8 gegen das feststehende obere Verschlußstück 7. Nach diesem Preßvorgang kann sich vorteilhaft ein Entlastungsvorgang für die Tablette anschließen, d. h. die Drehrichtung des Motors 33 wird umgekehrt. Es versteht sich, daß der Weg, den das untere Verschlußstück 8 wieder nach unten zurückfährt, entsprechend gering bemessen ist. Nun kann der eigentliche Brühvorgang ablaufen, d. h. die Steuereinheit öffnet ein entsprechendes Ventil und setzt eine Pumpe für Heißwasser in Gang, so daß die entsprechende Menge Heißwassers durch das obere Verschlußstück 7, die gepreßte Tablette aus Kaffeepulver und durch das untere Verschlußstück 8 hindurchgepreßt wird, so daß das fertige Kaffeegetränk am Kaffeeauslauf in eine Tasse oder ein Kännchen oder einen sonstigen Behälter abgegeben wird. Damit ist der Brühvorgang beendet, und das obere Verschlußstück 7 kann aus der Brühstellung in die Bereitschaftsstellung und weiter in die Parkstellung zurückgeführt werden. Zu diesem Zweck wird der Motor 10 in seiner anderen Drehrichtung in Gang gesetzt, wodurch der Gleitstein 28 zunächst wieder in dem achsparallelen Anfangsbereich 24 der Gleitbahn 23 arbeitet, so daß das obere Verschlußstück 7 aus der Brühstellung in die Bereitschaftsstellung axial nach oben angehoben wird. Die Bereitschaftsstellung wird durchfahren und der Gleitstein 28 gelangt in den steigenden Bereich 25 der Gleitbahn 23, wodurch einerseits die Verschwenkung des Dreharms 29 mit dem oberen Verschlußstück 7 aus der Bereitschaftsstellung in die Parkstellung ermöglicht wird. Andererseits wird auch der Schwenkabstreifer 32, der an der Führungsbuchse 17 liegt, ebenfalls in Uhrzeigerrichtung (Figur 3) verschwenkt, wobei dieser über die Oberfläche des Gehäuses 1 hinwegschwenkt. In Abstimmung zu diesem Schwenkvorgang wurde auch der Motor 33 für das untere Verschlußstück 8 in Tätigkeit gesetzt und durch einen axialen Hebevorgang im Rohrabschnitt 4 die ausgelaugte Tablette aus Kaffeepulver so weit nach oben über die Oberfläche des Gehäuses 1 angehoben, daß diese Tablette von dem Schwenkabstreifer 32 bei der Rückbewegung des Dreharms 29 erfaßt und seitlich in einen Aufnahmebehälter für ausgelaugte Kaffeepulvertabletten abgeworfen wird. Sobald die Tablette abgeworfen ist, wird der Motor 33 wiederum in umgekehrter Drehrichtung angetrieben, um die untere Stellung gemäß Figur 1 zu erreichen. Gleichzeitig erreicht das obere Verschlußstück 7 die Parkstellung über dem Ablauftrichter 38, und der Dusch-Reinigungsvorgang kann ablaufen. Der Trichter 37 steht über dem Brühraum 6 und leitet zu Beginn eines weiteren Brühzyklusses frisch gamahlenes Kaffeepulver in den Brühraum.

## Patentansprüche

1. Kaffeemaschinenautomat, insbesondere für Einzeltassen- und Kännchenfertigung, mit einem ein Gehäuse (1) aufweisenden Durchlauferhitzer (2) für die Bereitstellung von Heißwasser, mit mindestens einer Einrichtung zur Zufuhr von Kaffeepulver, mit einer Brühvorrichtung (5), die einen aus einem stationär mit vertikaler Achse (9) angeordneten Rohrabschnitt (4) sowie zwei Verschlußstücken (7, 8) gebildeten Brühraum (6) aufweist, der vorzugsweise in dem Durchlauferhitzer (2) angeordnet ist, mit einem Axialantrieb für die Bewegung des oberen Verschlußstücks (7) an einem Dreharm (29) in eine Brühstellung in den Rohrabschnitt (4) hinein und aus diesem heraus, einem Schwenkantrieb für die Bewegung des oberen Verschlußstücks (7) in eine Parkstellung außerhalb der Achse (9) des Rohrabschnitts (4) und in eine Bereitschaftsstellung in der Achse (9) des Rohrabschnitts sowie einem Vertikalantrieb für das untere Verschlußstück (8), und mit einem angetriebenen Schwenkabstreifer (32) für die Abfuhr der Tablette aus Kaffeepulver, dadurch gekennzeichnet, daß das obere Verschlußstück (7) fest mit dem Dreharm (29) verbunden ist, daß für den Axialantrieb und für den Schwenkantrieb des Dreharms (29) mit dem oberen Verschlußstück (7) sowie den angetriebenen Schwenkabstreifer (32) ein einziger Motor (10) mit einem nachgeschalteten Verteilergetriebe (16) vorhanden ist, daß das Verteilergetriebe (16) eine hubartig angetriebene Schwenksäule (15), eine axial gesicherte Führungsbuchse (17) und eine stationäre Nutbuchse (18) aufweist und daß in der Führungsbuchse (17) und in der Nutbuchse (18) je eine Gleitbahn (27, 23) für einen mit der Schwenksäule (15) verbundenen Gleitstein (28) vorgesehen ist.

2. Kaffeemaschinenautomat nach Anspruch 1, dadurch gekennzeichnet, daß der Motor (10) unterhalb des Durchlauferhitzers (2) angeordnet ist und daß das Verteilergetriebe (16) das Gehäuse (1) des Durchlauferhitzers (2) durchsetzt.

3. Kaffeemaschinenautomat nach Anspruch 1 oder 2, dadurch gekennzeichnet, daß das Verteilergetriebe (16) so ausgebildet ist, daß während des Bewegens des oberen Verschlußstücks (7) aus der Bereitschaftsstellung in die Parkstellung auch der Schwenkabstreifer (32) die Tablette aus Kaffeepulver abführt.

4. Kaffeemaschinenautomat nach Anspruch 3, dadurch gekennzeichnet, daß die erste Gleitbahn (23) in der Nutbuchse (18) einen achsparallelen Anfangsbereich (24) für das Überführen des oberen Verschlußstücks (7) aus der Brühstellung in die Bereitschaftsstellung und einen gewindeartig steigenden Bereich (25) für das Verschwenken des Dreharms (29) mit dem oberen Verschlußstück (7) aus der Bereitschaftsstellung in die Parkstellung aufweist.

5. Kaffeemaschinenautomat nach Anspruch 3 und 4, dadurch gekennzeichnet, daß die zweite Gleitbahn (27) in der Führungsbuchse (17) achsparallel angeordnet ist.

6. Kaffeemaschinenautomat nach einem der Ansprüche 1 bis 5, dadurch gekennzeichnet, daß der Dreharm (29) auf der dem oberen Verschlußstück (7) abgekehrten Seite über die Schwenksäule (15) hinaus verlängert ist und einen Anschlag (30) aufweist, daß am Gehäuse (1) des Durchlauferhitzers (2) ein dem Anschlag (30) zugeordneter Gegenanschlag (31) vorgesehen ist, an dem sich der Anschlag (30) des Dreharms (29) in der Brühstellung des oberen Verschlußstücks (7) abstützt.

7. Kaffeemaschinenautomat nach Anspruch 1 oder 3, dadurch gekennzeichnet, daß der Schwenkabstreifer (32) mit der Führungsbuchse (17) drehfest verbunden ist.

8. Kaffeemaschinenautomat nach Anspruch 1, dadurch gekennzeichnet, daß der Motor (10) für den Antrieb der Schwenksäule (15) ein Elektromotor, insbesondere ein Gleichstrommotor, ist und daß zwischen Motor (10) und Verteilergetriebe (16) ein Schneckengetriebe (11) und eine Mutter/Spindel-Einheit vorgesehen sind, wobei die Spindel (12) mit der Schwenksäule (15) drehfest verbunden ist.

9. Kaffeemaschinenautomat nach Anspruch 1, dadurch gekennzeichnet, daß der Motor (33) für die Bewegung des unteren Verschlußstücks (8) ein Elektromotor, insbesondere ein Gleichstrommotor, ist.

10. Kaffeemaschinenautomat nach Anspruch 4, dadurch gekennzeichnet, daß die Gleitbahn (23) in der Nutbuchse (18) einen achsparallelen Endabschnitt (26) aufweist.

## Claims

1. Automated coffee machine, especially for making single cups and pots of coffee, the coffee machine including a casing (1), a flow heater (2) for providing hot water disposed within the casing, a brewing device (5) preferably disposed within the flow heater (2), and at least one means for providing ground coffee, the brewing device (5) including a brewing chamber (6), formed from a stationary arranged pipe section (4) with a vertical axis (9), two stoppers (7, 8), an axial drive for moving the upper stopper (7) on a turning am (29) in a heating position into and out of the pipe section (4), a pivot drive for moving the upper stopper (7) into a parking position away from the axis (9) of the pipe section (4) and into a stand-by position in the axis (9) of the pipe section, a vertical drive for the lower stopper (8), and a driven swivel wiper (32) for the removal of a tablet of coffee grounds, **wherein** the upper stopper (7) is solidly attached to the turning am (29), that a single motor (10) with a following power divider (16) is provided for the axial drive and for the pivot drive of the turning am (29) with the upper stopper (7) as well as the drive of the swivel wiper (32), that the power divider (16) has a stroke-like driven pivot column (15), an axially secured guide bushing (17), and a stationary grooved bushing (18), and that the guide bushing (17) and the grooved bushing (18) each have a guiding slot (27, 23) for a crosshead (28), which is connected to the pivot column (15).

2. Automated coffee machine according to claim 1, **wherein** the motor (10) is arranged below the flow heater (2) and that the power divider (16) passes through the casing (1) of the flow heater (2).

3. Automated coffee machine according to claim 1 or 2, **wherein** the power divider (16) is formed so that during the motion of the upper stopper (7) from the stand-by position to the parking position the swivel wiper (32) simultaneously removes the tablet of coffee grounds.

4. Automated coffee machine according to claim 3, **wherein** the first gliding slot (23) in the grooved bushing (18) has an axially parallel starting region (24) for bringing the upper stopper (7) from the heating position to the stand-by position and a thread-like ascending region (25) for pivoting the turning arm (29) with the upper stopper (7) from the stand-by position to the parking position.

5. Automated coffee machine according to claim 3 and 4, **wherein** the second gliding slot (27) is arranged axially parallel in the guide bushing (17).

6. Automated coffee machine according to one of the claims 1 to 5, **wherein** the turning arm (29) is elongated surpassing the pivot column (15) on its side facing away from the upper stopper (7) and has a stop (30), that a counterstop (31) allocated to the stop (30) is provided on the casing (1) of the flow heater (2), the stop (30) of the turning arm (29) being supported on said counterstop (31) in the heating position of the upper stopper (7).

7. Automated coffee machine according to claim 1 or 3, **wherein** the swivel wiper (32) is connected to the guide bushing (17) in a non-turnable way.

8. Automated coffee machine according to claim 1, **wherein** the motor (10) for driving the pivot column (15) is an electric motor, especially a d.c. motor, and that a worm gear (11) and a nut/spindle-unit is provided in between the motor (10) and the power divider (16), in which the spindle (12) is connected to the pivot column (15) in a non-turnable way.

9. Automated coffee machine according to claim 1, **wherein** the motor (33) for moving the lower stopper (8) is an electric motor, especially a d.c. motor.

10. Automated coffee machine according to claim 4, **wherein** the gliding slot (23) in the grooved bushing (18) has an axially parallel end section (26).

## Revendications

1. Machine à café automatique, en particulier pour la préparation de tasses individuelles et de petites cafetières, comportant un chauffe-eau instantané (2) présentant un carter (1) pour la préparation d'eau chaude, comportant au moins un dispositif d'alimentation de poudre de café, comportant un dispositif d'infusion (5), qui présente une chambre d'infusion (6), formée par une portion de tube (4) placée fixe avec axe vertical (9) ainsi que par deux pièces de fermeture (7, 8), laquelle chambre est de préférence placée dans le chauffe-eau instantané (2), comportant un entraînement axial pour le déplacement de la pièce de fermeture supérieure (7) sur un bras tournant (29) dans une position d'infusion dans la portion de tube (4) et à l'extérieur de celui-ci, comportant un entraînement de pivotement pour le déplacement de la pièce de fermeture supérieure (7) dans une position d'attente à l'extérieur de l'axe (9) de la portion de tube (4) et dans une position de préparation dans l'axe (9) de la portion de tube ainsi qu'un entraînement vertical pour la pièce de fermeture inférieure (8), et comportant un racloir pivotant (32) entraîné pour l'évacuation de la galette de poudre de café, caractérisée en ce que la pièce de fermeture supérieure (7) est reliée fixement avec le bras tournant (29), en ce que pour l'entraînement axial et pour l'entraînement de pivotement du bras tournant (29) avec la pièce de fermeture supérieure (7) ainsi que pour le racloir pivotant (32) entraîné, il est prévu un seul moteur (10) avec un engrenage distributeur (16) monté en aval, en ce que l'engrenage distributeur (16) comporte une colonne de pivotement (15) entraînée en levage, une douille de guidage (17) bloquée axialement et une douille rainurée (18) fixe, et en ce que dans la douille de guidage (17) et dans la douille rainurée (18) il est prévu une voie de glissement (27, 23) pour un coulisseau (28) relié à la colonne de pivotement (15).

2. Machine à café automatique selon la revendication 1, caractérisée en ce que le moteur (10) est placé au-dessous du chauffe-eau instantané (2) et en ce que l'engrenage distributeur (16) traverse le carter (1) du chauffe-eau instantané (2).

3. Machine à café automatique selon la revendication 1 ou 2, caractérisée en ce que l'engrenage distributeur (16) est conçu de manière que pendant le déplacement de la pièce de fermeture supérieure (7), depuis la position de préparation vers la position d'attente, le racloir pivotant (32) évacue aussi la galette de poudre de café.

4. Machine à café automatique selon la revendication 3, caractérisée en ce que la première voie de glissement (23) dans la douille rainurée (18) présente une zone initiale (24) parallèle à l'axe pour le transfert de la pièce de fermeture supérieure (7), depuis la position d'infusion vers la position de préparation, et une zone (25) montant à la manière d'un filetage pour le pivotement du bras tournant (29) avec la pièce de fermeture supérieure (7), depuis la position de préparation vers la position d'attente.

5. Machine à café automatique selon les revendications 3 et 4, caractérisée en ce que la deuxième voie de glissement (27) est disposée parallèle à l'axe dans la douille de guidage (17).

6. Machine à café automatique selon l'une des revendications 1 à 5, caractérisée en ce que le bras tournant (29) est prolongé, sur le côté tourné à l'opposé de la pièce de fermeture supérieure (7), au-delà de la colonne de pivotement (15), et présente une butée (30), en ce que sur le carter (1) du chauffe-eau instantané (2) est prévue une contre-butée (31), associée à la butée (30), contre laquelle prend appui la butée (30) du bras tournant (29) dans la position d'infusion de la pièce de fermeture supérieure (7).

7. Machine à café automatique selon la revendication 1 ou 3, caractérisée en ce que le racloir pivotant (32) est relié solidaire en rotation avec la douille de guidage (17).

8. Machine à café automatique selon la revendication 1, caractérisée en ce que le moteur (10) pour l'entraînement de la colonne de pivotement (15) est un moteur électrique, en particulier un moteur à courant continu et en ce qu'entre le moteur (10) et l'engrenage distributeur (16) sont prévus un engrenage à vis sans fin (11) et une unité à broche et écrou, la broche (12) étant reliée solidaire en rotation avec la colonne de pivotement (15).

9. Machine à café automatique selon la revendication 1, caractérisée en ce que le moteur (33) pour le déplacement de la pièce de fermeture inférieure (8), est un moteur électrique, en particulier un moteur à courant continu.

10. Machine à café automatique selon la revendication 4, caractérisée en ce que la voie de glissement (23) dans la douille rainurée (18) présente une portion d'extrémité (26) parallèle à l'axe.
